# EUROPEAN PATENT APPLICATION

(11) **EP 2 431 842 A2**
(43) Date of publication of application: **21.03.2012**
(21) Application number: 11180549.5
(22) Date of filing: 08.09.2011
(51) Int. Cl.: G06F 3/023, G06F 3/048, H04M 1/00

(54) **Quick input language/virtual keyboard/ language dictionary change on a touch screen device**

(30) Priority: 16.09.2010 US 883385
(71) Applicant: Sony Ericsson Mobile Communications AB, 221 88 Lund (SE)
(72) Inventor: Backlund, Erik, 253 73 Gantofta (SE); Kristensson, Andreas, 211 28 Malmlö (SE)
(74) Representative: VALEA AB

(57) **Abstract**

A device having a touch screen display (110) selects a first language as an active input language. The device presents a first virtual keyboard associated with the first language on the touch screen display (110) and receives a touch input that includes a directional touch swipe (130) on the touch screen display (110). The device selects selecting a second language as the active input language based on the directional touch swipe (130), wherein the second language is different than the first language. The device further presents a second virtual keyboard associated with the second language on the touch screen display (110), wherein the second virtual keyboard is different than the first virtual keyboard.

## Description

### BACKGROUND

Many types of consumer electronics devices typically include a touch screen (touch panel or touch panel display) that may act as an output device that displays image, video and/or graphical information, and which further may act as an input touch interface device for receiving touch control inputs from a user. A touch screen may detect the presence and location of a touch within the area of the display, where the touch may include a touching of the display with a body part (e.g., a finger) or with certain objects (e.g., a stylus). Touch screens enable the user to interact directly with what is being displayed, rather than indirectly with a cursor controlled by a mouse or touchpad. Touch screens have become widespread in use with various different types of consumer electronic devices, including, for example, cellular radiotelephones, personal digital assistants (PDAs), and hand-held gaming devices.

### SUMMARY

In one exemplary embodiment, a method may include selecting a first language as an active input language on a device having a display and presenting a first virtual keyboard associated with the first language on the display. The method may further include receiving a touch input comprising a directional touch swipe and selecting a second language as the active input language based on the directional touch swipe, wherein the second language is different than the first language. The method may also include presenting a second virtual keyboard associated with the second language on the display, wherein the second virtual keyboard is different than the first virtual keyboard.

Additionally, the display may include a touch screen display and the touch input may be received via the touch screen display.

Additionally, the touch input may be received via a touch pad that is separate from the display.

Additionally, the device may include a cellular radiotelephone, a satellite navigation device, a smart phone, a Personal Communications System (PCS) terminal, a personal digital assistant (PDA), a gaming device, a media player device, a tablet computer, or a digital camera.

Additionally, the directional touch swipe may include a touch input that moves in approximately a linear direction across the touch screen display.

Additionally, the linear direction may include a direction that is transverse to an axis running from a top to a bottom of the touch screen display.

Additionally, the method may further include accessing a first language dictionary associated with the first language while the first language is the active input language; and accessing a second language dictionary associated with the second language while the second language is the active input language.

Additionally, the method may further include receiving user entered text while the first language is the active input language; presenting word suggestions on the touch screen display based on the user entered text and based on the first language dictionary; receiving user entered text while the second language is the active input language; and presenting word suggestions on the touch screen display based on the user entered text and based on the second language dictionary.

Additionally, the method may further include receiving another touch input comprising a directional touch swipe; selecting a third language as the active input language based on the other touch input, where the third language is different than the second language; and presenting a third virtual keyboard associated with the third language on the display, wherein the third virtual keyboard is different than the second virtual keyboard.

In another exemplary embodiment, a device may include a touch screen display disposed on a face of the device and configured to receive a touch input, and a language selection module configured to select a first language as an active input language on the device. The device may further include a touch screen display input/output module configured to: present a first virtual keyboard associated with the first language on the touch screen display, and receive indication of a touch input comprising a directional touch swipe from the touch screen display. The language selection module may be further configured to select a second language as the active input language based on the directional touch swipe, wherein the second language is different than the first language. The touch screen display input/output module may be further configured to present a second virtual keyboard associated with the second language on the touch screen display, wherein the second virtual keyboard is different than the first virtual keyboard.

Additionally, the device may include a cellular radiotelephone, a satellite navigation device, a smart phone, a Personal Communications System (PCS) terminal, a personal digital assistant (PDA), a gaming device, a media player device, a tablet computer, or a digital camera.

Additionally, the directional touch swipe may include a touch input that moves in approximately a linear direction across the touch screen display.

Additionally, the linear direction may include a direction that is transverse to an axis running from a top to a bottom of the touch screen display.

Additionally, the device may further include a language dictionary module configured to: access a first language dictionary associated with the first language while the first language is the active input language; and access a second language dictionary associated with the second language while the second language is the active input language.

Additionally, the touch screen display input/output module may be further configured to: receive user entered text while the first language is the active input language, and a word suggestion module may be configured to provide word suggestions for display on the touch screen display based on the user entered text and based on the first language dictionary.

Additionally, the touch screen display input/output module may be further configured to: receive user entered text while the second language is the active input language, and the word suggestion module may be further configured to provide word suggestions for display on the touch screen display based on the user entered text and based on the second language dictionary.

Additionally, the touch screen display input/output module may be further configured to receive an indication of another touch input comprising another directional touch swipe on the touch screen display; the language selection module may be further configured to select a third language as the active input language based on the other touch input, wherein the third language is different than the second language; and the touch screen display input/output module may be further configured to present a third virtual keyboard associated with the third language on the touch screen display, wherein the third virtual keyboard is different than the second virtual keyboard.

In yet another exemplary embodiment, a computer-readable medium containing instructions executable by at least one processing unit may include one or more instructions for selecting a first language as an active input language on a device having a touch screen display, one or more instructions for presenting a first virtual keyboard associated with the first language on the touch screen display. The computer-readable medium may further include one or more instructions for identifying a touch input comprising a directional swipe on the touch screen display and one or more instructions for selecting a second language as the active input language based on the directional touch swipe, wherein the second language is different than the first language. The computer-readable medium may also include one or more instructions for presenting a second virtual keyboard associated with the second language on the touch screen display, wherein the second virtual keyboard is different than the first virtual keyboard.

Additionally, the directional touch swipe may include a touch input that moves in approximately a linear direction across the touch screen display and the linear direction may include a direction that is transverse to an axis running from a top to a bottom of the touch screen display.

Additionally, the computer-readable medium may further include one or more instructions for accessing a first language dictionary associated with the first language while the first language is the active input language; and one or more instructions for accessing a second language dictionary associated with the second language while the second language is the active input language.

### BRIEF DESCRIPTION OF THE DRAWINGS

The accompanying drawings, which are incorporated in and constitute a part of this specification, illustrate one or more embodiments described herein and, together with the description, explain these embodiments. In the drawings:

FIG. 1 illustrates an overview of the use of a touch screen display for quickly changing an input language, a virtual keyboard layout and a language dictionary on a device;

FIG. 2 is a diagram that depicts an exemplary environment in which a device having a touch screen display may operate according to embodiments described herein;

FIG. 3 is a diagram of exemplary components of the device of FIG. 2;

FIG. 4 is a diagram that depicts an exemplary implementation of the device of FIG. 3 where the input device and output device are implemented by a touch screen display;

FIG. 5 is a diagram that depicts exemplary functional components of the device of FIG. 3;

FIG. 6 is a flow diagram that illustrates an exemplary process for user selection of a default input language and user selection of a list of secondary input languages for obtaining corresponding virtual keyboards and language dictionaries for each of the default and/or secondary input languages;

FIGS. 7-9 are diagrams that depict examples associated with the exemplary process of FIG. 6;

FIGS. 10A and 10B are flow diagrams illustrating an exemplary process for changing active languages on a device based on a directional touch swipe input received from a user; and

FIGS. 11-13 are diagrams that depict examples associated with the exemplary process of FIGS. 10A and 10B.

### DETAILED DESCRIPTION

The following detailed description refers to the accompanying drawings. The same reference numbers in different drawings may identify the same or similar elements. Also, the following detailed description does not limit the invention.

### OVERVIEW

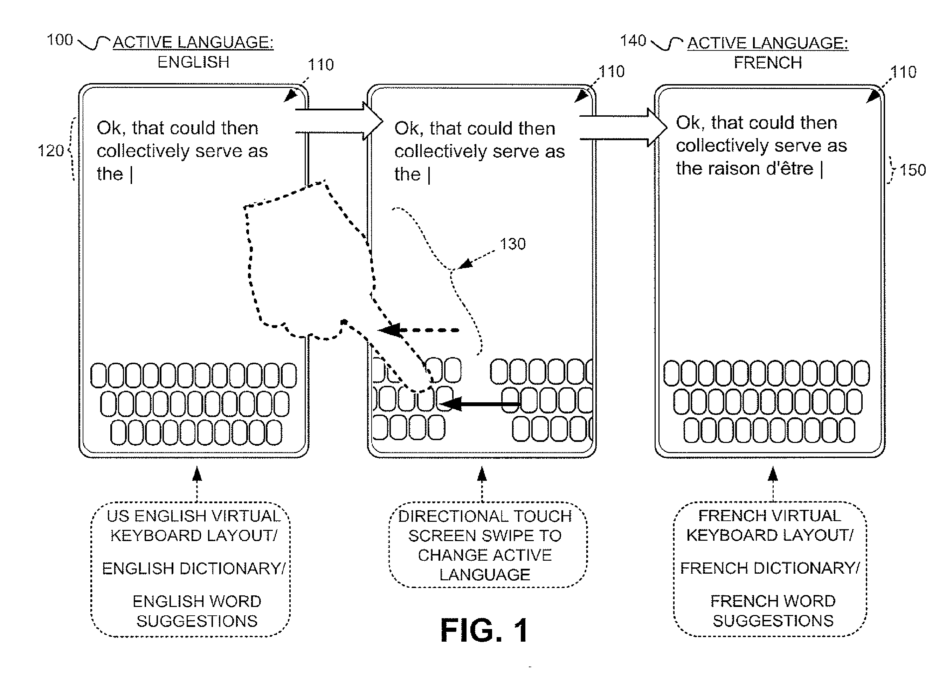

FIG. 1 illustrates an overview of the use of a touch screen display for quickly changing an input language, and a corresponding change in virtual keyboard layout and change in language dictionary, on a device. In exemplary embodiments described herein, a user may interact with a touch screen display to change from a first active input language to a second active input language. When the first input language is active (e.g., English), a virtual keyboard that corresponds to the first input language is accessible via the touch screen display in conjunction with a language dictionary associated with the first input language. Thus, the user of the device may enter text via the virtual keyboard that corresponds to the first input language. When the second input language is active (e.g., French), a virtual keyboard that corresponds to the second input language is accessible via the touch screen display, in conjunction with a language dictionary associated with the second input language. Thus, the user of the device may enter text via the virtual keyboard that corresponds to the second input language.

As shown in the example of FIG. 1, English may initially be selected as an active language 100 on a device having a touch screen display 110. With English being selected as the active language, then a US English virtual keyboard layout, an English dictionary, and English word suggestions may be available to the user when the user enters text 120 via touch screen display 110. The user may change the active language by providing a touch input to touch screen display 110 that includes a directional touch "swipe" 130 on display 110. For example, the user may touch display 110 with a finger, as shown in FIG. 1, and swipe the finger in a continuous touch that moves across display 110 in a direction. The directional touch swipe 130 may consist of a touch that moves in approximately a linear direction across touch screen display 110. The directional touch swipe 130 may occur "over" the virtual keyboard that is being selected for change. In one exemplary implementation, the direction may be transverse to an imaginary axis that runs through the "top" and "bottom" of the touch screen display, and the directional touch swipe may move in one or two possible different directions - towards a first side of the device (e.g., a left side of the device) and/or towards a second side of the device (e.g., a right side of the device). The "top" and "bottom" of the touch screen display may actually change depending on the orientation of the device as selected by the user. For example, the user may rotate display 110 of device 210 onto its side, and the orientation of the display output may automatically change such that the physical sides of display 110 are now considered "top" and "bottom" and the physical top and bottom of display 110 are now considered the "sides" (i.e., display 110 now includes a "widescreen" view). The direction of touch swipe 130 may be transverse to the imaginary axis that runs through the current "top" and "bottom" of the touch screen display, as determined by the orientation of display 110. The directional touch swipe may "drag" the virtual keyboard associated with the current active language out of view on display 110 and may "drag" a virtual keyboard associated with a selected second language into view on display 110. The terms "touch" or "touch input," as used herein, may refer to a touch of an object, such as a body part (e.g., a finger) or a pointing device (e.g., a stylus, pen, etc.).

Upon completion of directional touch swipe 130, another language may be selected as the active language. As shown in FIG. 1, French may be selected as the active language 140 due to directional touch swipe 130. With French being selected as the active language, then a French virtual keyboard layout, a French dictionary, and French word suggestions may be available to the user when the user continues to enter text 150 via touch screen display 110.

Though only a single change in active language is depicted in FIG. 1, each directional swipe by the user may select another active language, including a corresponding change in virtual keyboard layout, change in language dictionary, and change in word suggestions made available to the user when the user is entering text. For example, if English is the user's default language, then a directional touch swipe to the left (as shown in FIG. 1) may select French as the active language causing a French virtual keyboard layout to be accessible via touch screen display 110, and a French language dictionary and French word suggestions being available to the user. The user may continue with another directional touch swipe to the left to select German as the active language, causing a German virtual keyboard layout to be accessible via touch screen display 110, and a German language dictionary and German word suggestions being available to the user. Additionally, once German is selected as the active language, the user may return to English as the active language by making two directional touch swipes to the right. From there, the user may select Swedish as the active language by making another directional touch swipe to the right. The order of the user's default language, relative to other languages, that determines the number and direction of touch swipes that the user must use to activate any given language, may be selected by the user, or may be predefined.

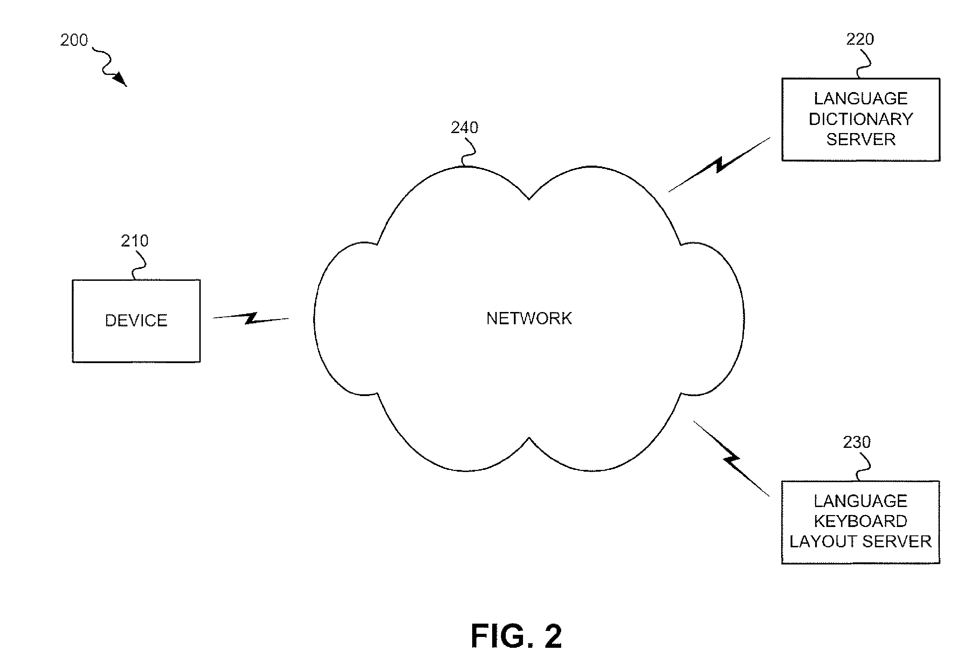

FIG. 2 is a diagram that depicts an exemplary environment 200 in which a device having a touch screen display may operate according to embodiments described herein. Environment 200 may include a device 210, a language dictionary server 220, a language keyboard layout server 230, and a network 240.

Device 210 may include any type of electronic device that includes touch screen display 110 described above with respect to FIG. 1. For example, device 210 may include a cellular telephone; a satellite navigation device; a smart phone; a Personal Communications System (PCS) terminal that may combine a cellular radiotelephone with data processing, facsimile and data communications capabilities; a personal digital assistant (PDA) that can include a radiotelephone, pager, Internet/Intranet access, Web browser, organizer, calendar and/or a global positioning system (GPS) receiver; a gaming device; a media player device; a tablet computer; a digital camera; or another device that may use touch input. In some exemplary embodiments, device 210 may include a hand-held electronic device.

Language dictionary server 220 may include a server or server device that may supply dictionary data, related to multiple different languages (e.g., English, French, German, Swedish, Spanish, etc.) to device 210.

Language keyboard layout server 230 may include a server or server device that may supply virtual keyboard layouts related to multiple different languages to device 210. The virtual keyboard layouts supplied by server 230 may be used by device 210 to generate virtual keyboards for display on touch screen display 110 for multiple different languages.

Network 240 may include one or more networks of any type, such as, for example, a telecommunications network (e.g., a Public Switched Telephone Network (PSTN)), a local area network (LAN), a wide area network (WAN), a metropolitan area network (MAN), an intranet, the Internet, a wireless satellite network, a cable network (e.g., an optical cable network), and/or one or more wireless public land mobile networks (PLMNs). The PLMN(s) may include a Code Division Multiple Access (CDMA) 2000 PLMN, a Global System for Mobile Communications (GSM) PLMN, a Long Term Evolution (LTE) PLMN and/or other types of PLMNs not specifically described herein.

The configuration of environment 200 depicted in FIG. 2 is for illustrative purposes only. It should be understood that other configurations may be implemented. Therefore, environment 200 may include additional, fewer and/or different components than those depicted in FIG. 2. For example, though only a single device 210 is shown in FIG. 1, multiple devices 210 may connect to network 240, with each device possibly having a different user.

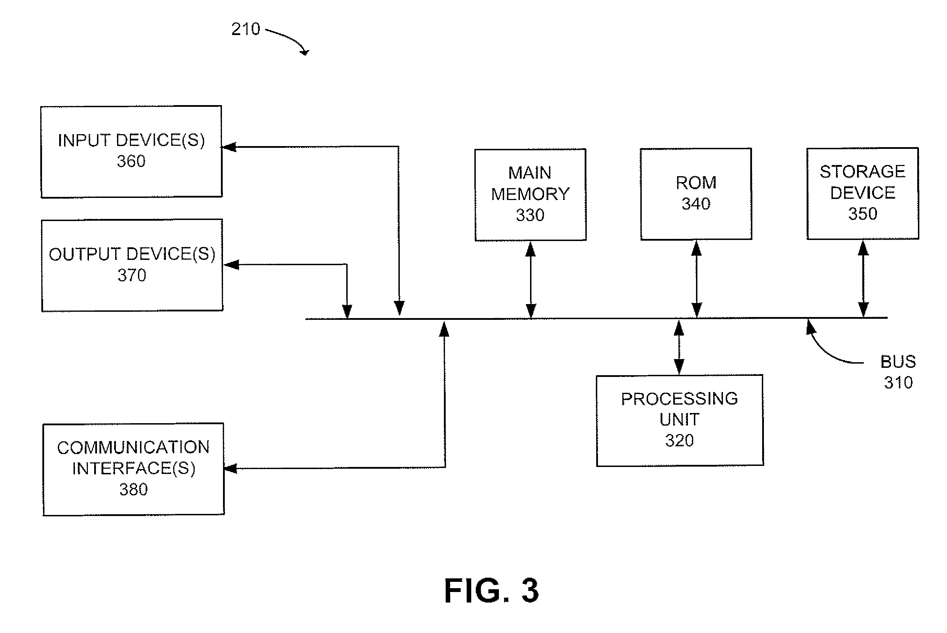

FIG. 3 is a diagram of exemplary components of device 210. Device 210 may include a bus 310, a processing unit 320, a main memory 330, a read only memory (ROM) 340, a storage device 350, an input device(s) 360, an output device(s) 370, and a communication interface 380. Bus 310 may include a path that permits communication among the elements of device 210. Servers 220 and 230 may be configured similarly to device 210 shown in FIG. 3.

Processing unit 320 may include a processor, microprocessor, or processing logic that may interpret and execute instructions. Main memory 330 may include a random access memory (RAM) or another type of dynamic storage device that may store information and instructions for execution by processing unit 320. ROM 340 may include a ROM device or another type of static storage device that may store static information and instructions for use by processing unit 320. Storage device 350 may include a magnetic and/or optical recording medium and its corresponding drive. Storage device 350 may further include a flash drive.

Input device(s) 360 may permit a user to input information to device 210, such as, for example, a keypad or a keyboard, voice recognition and/or biometric mechanisms, etc. Additionally, input device(s) 360 may include a touch screen display having a touch panel that permits touch input by the user. Output device(s) 370 may output information to the user, such as, for example, a display, a speaker, etc. Additionally, output device(s) 370 may include a touch screen display where the display outputs information to the user. Communication interface 380 may enable device 210 to communicate with other devices and/or systems. Communication interface 380 may communicate with another device or system via a network, such as network 240. For example, communication interface 380 may include a radio transceiver for communicating with network 240 via wireless radio channels.

Device 210 may perform certain operations or processes, as described in detail below. Device 210 may perform these operations in response to processing unit 320 executing software instructions contained in a computer-readable medium, such as memory 330. A computer-readable medium may be defined as a physical or logical memory device. A logical memory device may include memory space within a single physical memory device or spread across multiple physical memory devices.

The software instructions may be read into main memory 330 from another computer-readable medium, such as storage device 350, or from another device via communication interface 380. The software instructions contained in main memory 330 may cause processing unit 320 to perform operations or processes that are described below. Alternatively, hardwired circuitry may be used in place of or in combination with software instructions to implement processes consistent with different embodiments of device 210. Thus, exemplary implementations are not limited to any specific combination of hardware circuitry and software.

The configuration of components of device 210 illustrated in FIG. 3 is for illustrative purposes only. It should be understood that other configurations may be implemented. Therefore, device 210 may include additional, fewer and/or different components than those depicted in FIG. 3.

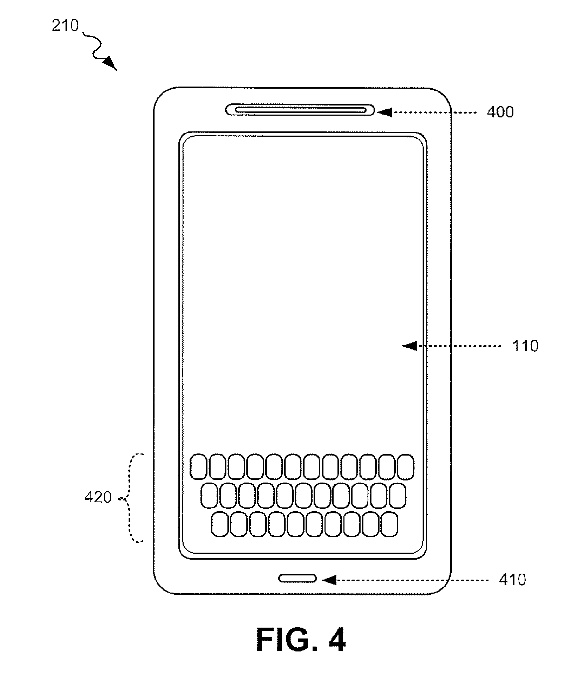

FIG. 4 is a diagram that depicts an exemplary implementation of device 210 where input device(s) 360 and output device(s) 370 are implemented, in part, by touch screen display 110. Touch screen display 110 may include a touch panel, disposed on a front of device 110, which may permit control of the device via touch input by the user. The touch panel may be integrated with, and/or overlaid on, a display of touch screen display 110 to form a touch screen or a panel-enabled display that may function as a user input interface. For example, in one implementation, the touch panel may include a near field-sensitive (e.g., capacitive), acoustically-sensitive (e.g., surface acoustic wave), photo-sensitive (e.g., infrared), and/or any other type of touch panel that allows a display to be used as an input device. In another implementation, the touch panel may include multiple touch-sensitive technologies. Generally, the touch panel may include any kind of technology that provides the ability to identify the occurrence of a touch upon touch screen display 110. In an alternative implementation, device 210 may include a separate touch pad in addition to touch screen display 110, or in addition to a display that does not include a touch panel, for touch input functionality. The touch pad may, in addition to other uses, receive directional touch swipes for selecting an active language and a corresponding virtual keyboard layout, language dictionary, etc. A defined area of the touch pad may be used for receiving the directional touch swipes. The separate touch pad may be disposed on a face of device 210 in addition to touch screen display 110, or in addition to a display that does not include touch input functionality. The user may enter directional touch swipes via the separate touch pad, and corresponding changes in active language, virtual keyboard layout, etc. may be displayed on the touch screen display or on a display that does not include touch input functionality.

The display component of touch screen display 110 may include a device that can display signals generated by device 210 as text or images on a screen (e.g., a liquid crystal display (LCD), cathode ray tube (CRT) display, organic light-emitting diode (OLED) display, surface-conduction electro-emitter display (SED), plasma display, field emission display (FED), bistable display, etc.). In certain implementations, the display may provide a high-resolution, active-matrix presentation suitable for the wide variety of applications and features associated with typical devices. The display may provide visual information to the user and serve—in conjunction with the touch panel—as a user interface to detect user input.

In the exemplary implementation depicted in FIG. 4, output device(s) 370 may further include a speaker 400 that outputs audio information (e.g., speech) and input device(s) 360 may further include a microphone 410 for inputting audio information (e.g., speech). Touch screen display 110 may display a virtual keyboard 420 that, in conjunction with the touch panel component of display 110, may be used to enter text into device 210.

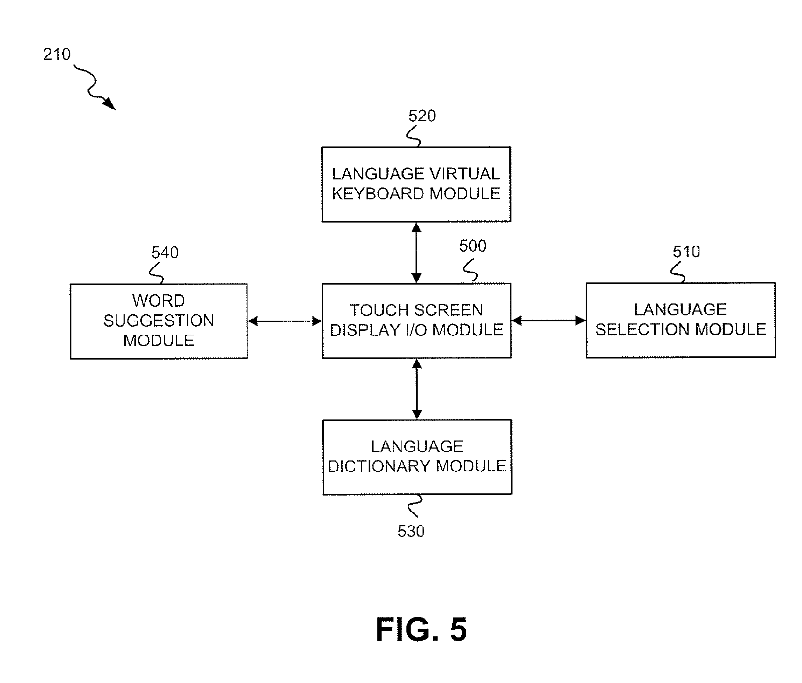

FIG. 5 is a diagram that depicts exemplary functional components of device 210. The functional components of FIG. 5 may be implemented by processing unit 320, possibly in conjunction with other components of device 210 depicted in FIG. 3. As shown in FIG. 5, the functional components of device 210 may include a touch screen display I/O module 500, a language selection module 510, a language virtual keyboard module 520, a language dictionary module 530, and a word suggestion module 540.

Touch screen display I/O module 500 may monitor touch inputs (including directional touch swipes) to touch screen display 110. Touch screen display I/O module 500 may further present virtual keyboards, user entered text, or word suggestions via touch screen display 110. Language selection module 510 may receive, from the user, default language selections and secondary input language selections. Language selection module 510 may also select the current active input language based on directional touch swipes received via touch screen display 110 and based on the user-selected default language and the user-selected secondary input languages. Language virtual keyboard module 520 may obtain, store and manage virtual keyboards for the default language and the secondary input languages. Language dictionary module 530 may obtain, store and manage language dictionaries for the default language and for each of the secondary input languages. Word suggestion module 540 may use language dictionary information obtained from language dictionary module 530 to generate word suggestions based on user entered text.

### EXEMPLARY PROCESSES

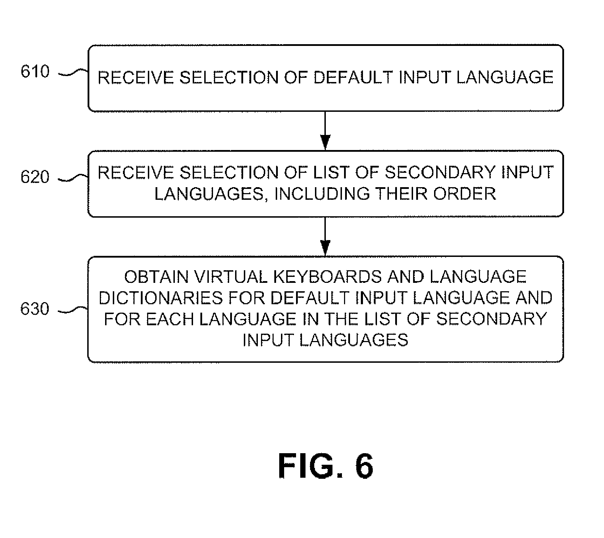

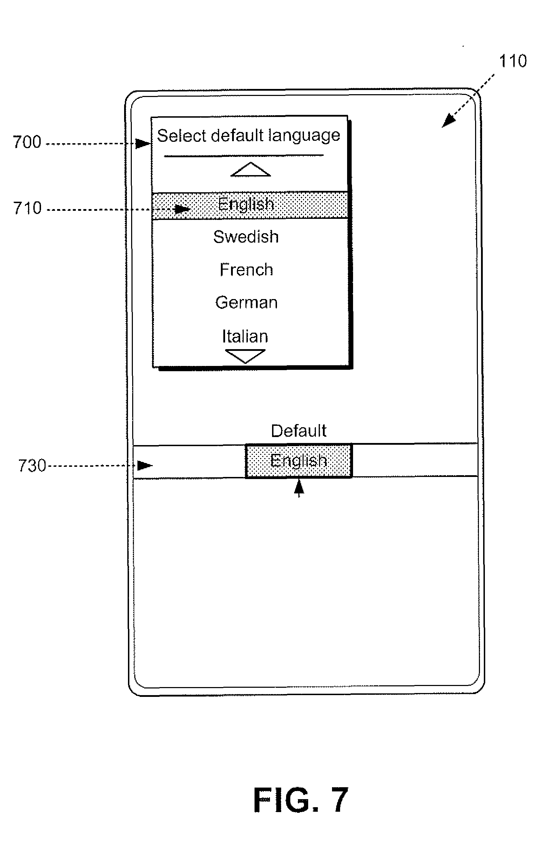

FIG. 6 is a flow diagram illustrating an exemplary process for user selection of a default input language, and user selection of a list of secondary input languages, for obtaining corresponding virtual keyboards and language dictionaries for each of the default and/or secondary input languages. The exemplary process of FIG. 6 may be implemented by device 210. The exemplary process of FIG. 6 is described below with reference to FIGS. 7-9.

The exemplary process may include receiving selection of a default input language (block 610). Referring to FIG. 7, a "select default language" window 700 may be presented in touch screen display 110, where window 700 presents a list of languages from which a single language may be selected by the user of device 210 as the default language. As shown in FIG. 7, the user may select English 710 from window 700 presented on touch screen display 110 using a touch input. In response to selection of English from window 700, English may be placed in the default language position of language bar 730. Language bar 730 may identify the default language, and secondary input languages, that may serve as active languages of device 210.

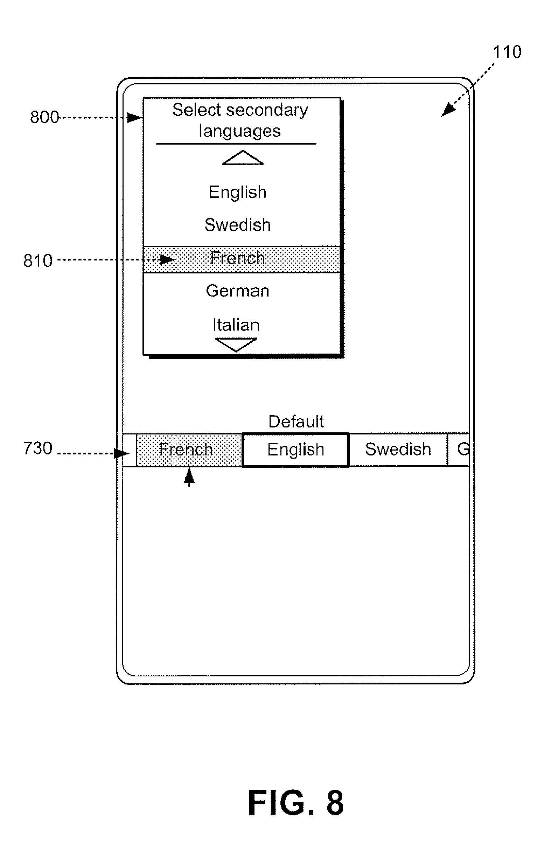

A selection of a list of secondary input languages, including their order, may be received (block 620). Referring to FIG. 8, a "select secondary languages" window 800 may be presented in touch screen display 110, where window 800 presents a list of languages that may be selected by the user of device 210, in addition to the default language, to be placed on language bar 730. As shown in FIG. 8, the user may select French 810 from window 800 using a touch input. In response to selection of French from window 800, French may be placed at a position on language bar 730 (shown by the arrow) selected by the user. Therefore, the user may scroll up and down through window 800 to select one or more languages to place in selected locations on language bar 730. The selected locations on language bar 730 may include locations to the left of the default language or locations to the right of the default language. In one exemplary implementation, language bar 730 may "wrap around" in a circular fashion. For example, continuous directional touch swipes in a single direction (e.g., either left of right) can return the position on language bar 730 to a given position (e.g., multiple leftward directional touch swipes, starting from the default language, may eventually return the position on language bar 730 to the default language (after passing through all of the secondary languages)).

Virtual keyboards and language dictionaries may be obtained for the default input language and for each language in the list of secondary input languages (block 630). A virtual keyboard and a language dictionary may be obtained for the default language selected by the user, and for each secondary input language selected by the user. A virtual keyboard may be obtained by device 210 for the default language and for each secondary input language from language keyboard layout server 230. The language dictionary may be obtained by device 210 for the default language and for each secondary input language from language dictionary server 220.

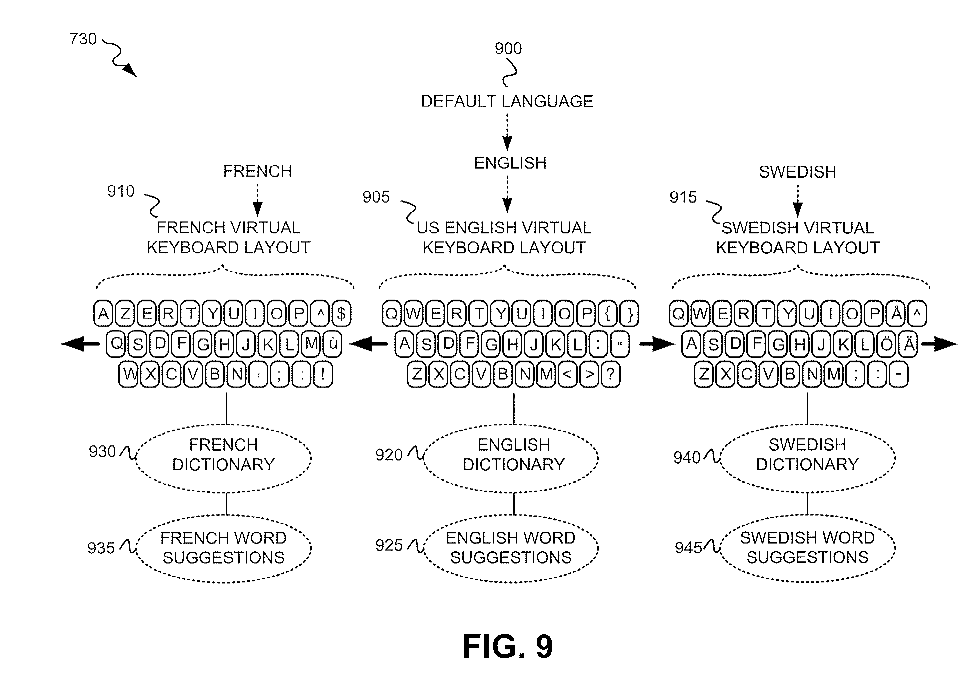

FIG. 9 is a diagram that depicts an example of language bar 730 of FIGS. 7 and 8, where the default language 900 is located at the center of language bar 730, and where the secondary input languages are located to the right and to the left of default language 900. The relative position each secondary input language has with respect to default language 900 on language bar 730 indicates the number of directional touch swipes that the user must use to change from the default language as an active language to one of the secondary input languages as the active language. For example, FIG. 9 shows English as default language 900, with French being the secondary input language directly to the left of default language 900, and Swedish being the secondary input language directly to the right of default language 900. Thus, a single directional touch swipe to the right may change the active input language from English to French. Alternatively, a single directional touch swipe to the left may change the active input language from English to Swedish. Additional secondary input languages may be located on language bar 730 (e.g., to the left of French and to the right of Swedish), but are not shown in FIG. 9 due to size limitations.

As further shown in FIG. 9, virtual keyboard layouts may be obtained for each language located on language bar 730. For example, a US English virtual keyboard layout 905 may be obtained for the English default language 900 on language bar 730. Additionally, a French virtual keyboard layout 910 may be obtained for the French language on language bar 730. Furthermore, a Swedish virtual keyboard layout 915 may be obtained for the Swedish language on language bar 730. As also shown in FIG. 9, language dictionaries and corresponding word suggestions may be obtained for each language located on language bar 730. For example, as shown in FIG. 9, an English dictionary 920 and English word suggestions 925 may be obtained for the English default language 900. Additionally, a French dictionary 930 and French word suggestions 935 may be obtained for the French secondary input language. Also, a Swedish dictionary 940 and Swedish word suggestions 945 may be obtained for the Swedish secondary input language.

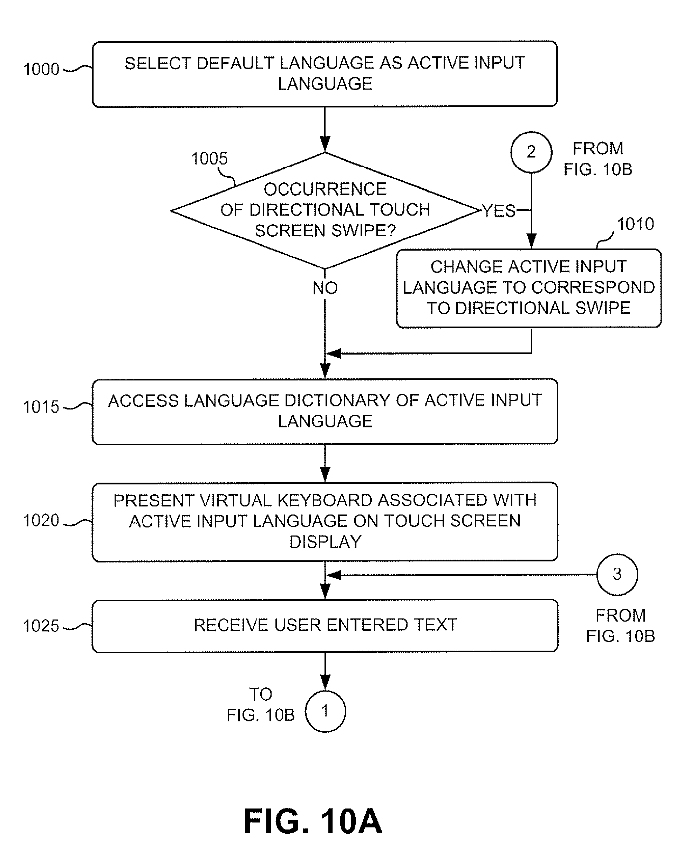

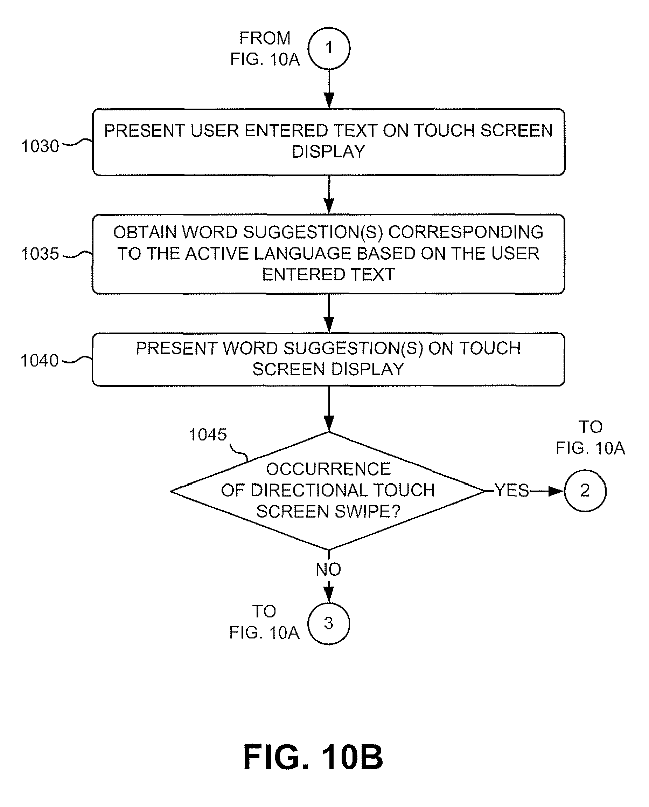

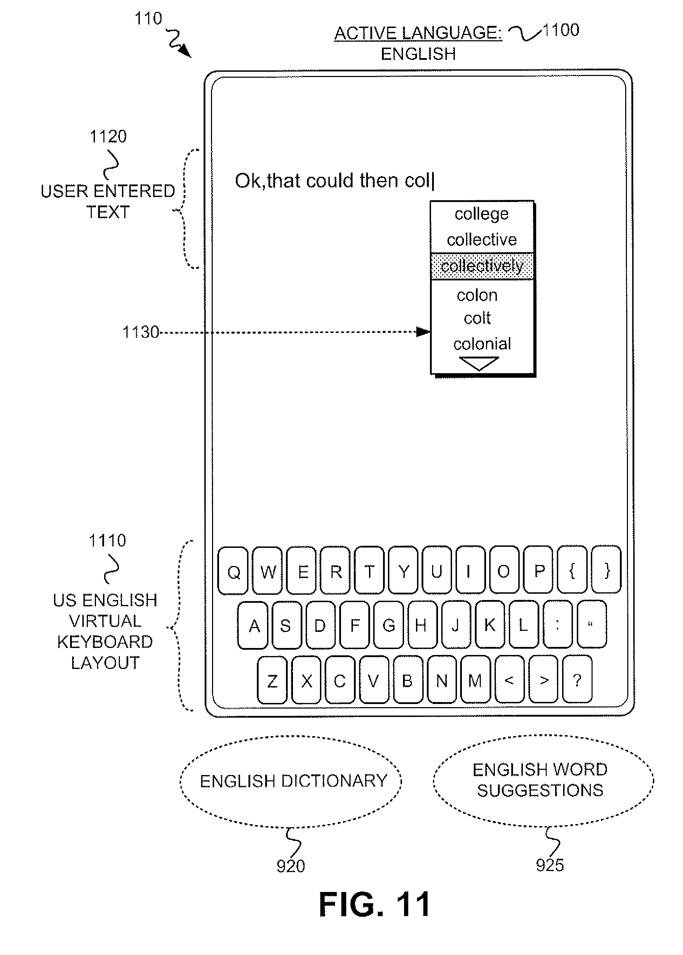

FIGS. 10A and 10B are flow diagrams illustrating an exemplary process for changing active languages on device 210 based on directional touch swipe inputs received from a user. The exemplary process of FIGS. 10A and 10B may be performed by device 210. The exemplary process of FIGS. 10A and 10B is described below with reference to FIGS. 11-13.

The exemplary process may include selecting a default language as an active input language (block 1000). The user designated default language may be automatically selected as the active input language upon power up of device 210 (i.e., designated by the user in block 610 of FIG. 6). In the event that no default language has been selected by the user, the active language may be selected based on previous usage of device 210. For example, if the user has previously used a certain language a significant percentage of the time, then that language may be automatically selected as the active language. Language selection module 510 may select the active input language. Referring to the example of FIG. 11, English, selected by the user as the default language in the example of FIG. 7, may be selected as the active input language 1100.

It may be determined whether a directional touch swipe has occurred on touch screen display 110 (block 1005). Touch screen display I/O module 500 may monitor touch inputs to touch screen display 110 to determine if any touch inputs constitute directional touch swipes. If so (YES - block 1005), then the active input language may be changed to correspond to the directional touch swipe (block 1010). For example, if a leftwards directional touch swipe occurs upon touch screen display 110, then a secondary input language to the right of the default language on language bar 730 may be selected as the active input language.

If a directional touch swipe has not occurred on touch screen display 110 (NO - block 1005), then a language dictionary of the active input language may be accessed (block 1015). Language dictionary module 530 may access a language dictionary corresponding to the active input language. The language dictionary may be stored in, for example, main memory 330 of device 210 (though other storage locations in device 210 are possible).

A virtual keyboard associated with the active input language may be presented on touch screen display 110 (block 1020). Language virtual keyboard module 520 may access a virtual keyboard layout that corresponds to the active input language. The virtual keyboard layout may be stored in, for example, main memory 330 of device 210 (though other storage locations in device 210 are possible). Language virtual keyboard module 520 may supply the virtual keyboard layout of the active input language to touch screen display I/O module 500 for display to the user. Referring to the example of FIG. 11, a US English virtual keyboard layout 1110 may be presented via touch screen display 110.

User entered text may be received (block 1025). The user may enter text via touch screen display 110 and the virtual keyboard presented in block 1020. The user entered text may be presented to the user on touch screen display 110 (block 1030). As shown in the example of FIG. 11, user entered text may be received from the user via keyboard layout 1110 and may be displayed on touch screen display 110 as user entered text 1120.

Word suggestions corresponding to the active language may be obtained based on the user entered text (block 1035). Word suggestion module 540 may use dictionary information obtained from language dictionary module 530 to identify suggested words based on current text entered by the user. As shown in the example of FIG. 11, the user has temporarily entered the letters "col" via virtual keyboard layout 1110. In response, word suggestion module 540 may identify numerous words that include those letters. For example, as shown in FIG. 11, word suggestion module 540 may identify the words "college," "collective," "collectively," "colon," "colt," and "colonial." The obtained word(s) may be presented to the user on touch screen display 110 (block 1040). Referring to the example of FIG. 11, touch screen display I/O module 500 may present the word suggestions via a window 1130 on touch screen display 110.

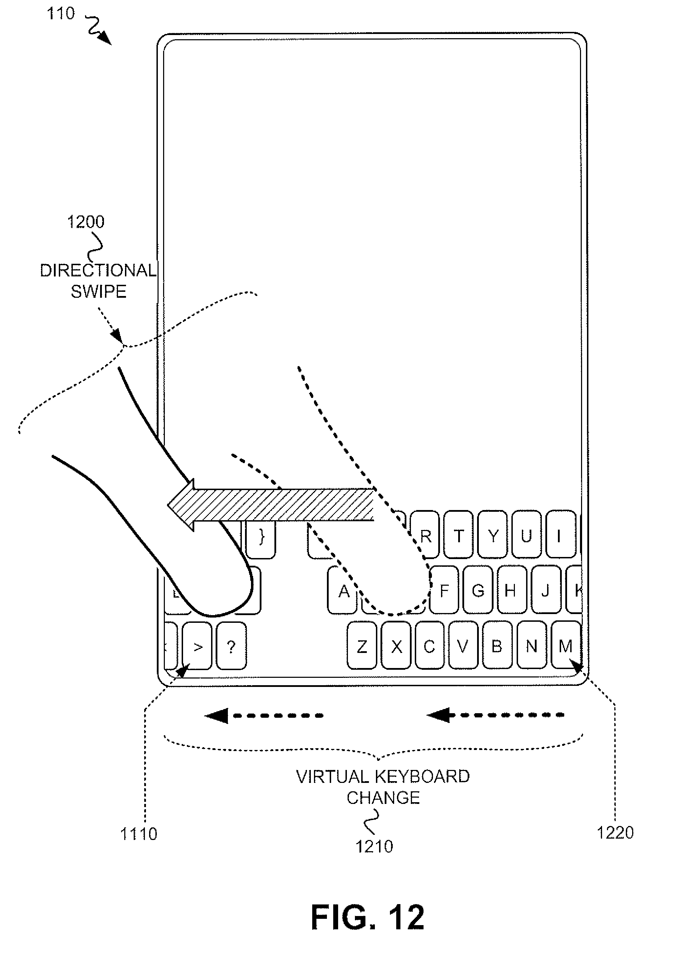

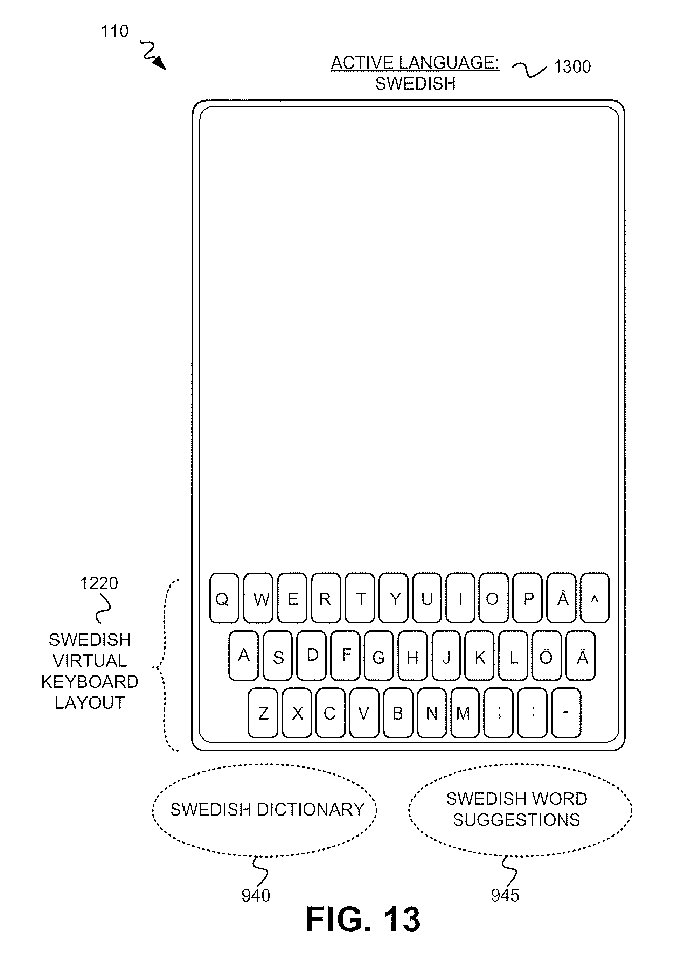

It may be determined if a directional touch swipe has occurred on touch screen display 110 (block 1045). Touch screen display I/O module 500 may monitor touch inputs to touch screen display 110 to determine if any touch inputs constitute directional touch swipes. If so (YES - block 1045), the exemplary process may continue at block 1010 with a change in the active input language to correspond to the directional touch swipe. Referring to the example of FIG. 12, the user may enter a leftwards directional touch swipe 1200 upon touch screen display 110, resulting in a change of active input language and a corresponding virtual keyboard change 1210. As shown in FIG. 12, the virtual keyboard may change 1210 from the US English keyboard layout 1110 to the Swedish keyboard layout 1220 is based on the directional touch swipe 1200 "dragging" the English keyboard layout 1110 leftwards out of the view of display 110 and correspondingly "dragging" the Swedish keyboard layout 1220 leftwards into the view of display 110. Directional touch swipe 1200, as shown in FIG. 12, may occur "over" US English keyboard layout 1110 such that keyboard layout 1110 is the virtual keyboard selected for change. As further shown in FIG. 13, Swedish may be selected as the new active language 1300. The user may then enter text in Swedish using Swedish virtual keyboard layout 1220. If a directional touch swipe has not occurred on touch screen display 110 (NO - block 1045), then the exemplary process may continue at block 1025 with the further user entry of text in the current, unchanged active input language. Blocks 1015 through 1045 of the exemplary process may be selectively repeated as the user changes from one active language to another active language, or from one active language back to a previous active language.

### CONCLUSION

Implementation described herein use a touch screen display for quickly changing an input language, and a corresponding change in virtual keyboard layout and change in language dictionary, on a device. Therefore, the user may quickly change back and forth between multiple different languages while entering text into a device via a virtual keyboard on a touch screen display of the device.

The foregoing description of the embodiments described herein provides illustration and description, but is not intended to be exhaustive or to limit the invention to the precise form disclosed. Modifications and variations are possible in light of the above teachings or may be acquired from practice of the invention. For example, while a series of blocks has been described with respect to FIGS. 6, 10A and 10B, the order of the blocks may be varied in other implementations. Moreover, non-dependent blocks may be performed in parallel.

Certain features described herein may be implemented as "logic" or as a "unit" that performs one or more functions. This logic or unit may include hardware, such as one or more processors, microprocessors, application specific integrated circuits, or field programmable gate arrays, software, or a combination of hardware and software.

The term "comprises" or "comprising" as used herein, including the claims, specifies the presence of stated features, integers, steps, or components, but does not preclude the presence or addition of one or more other features, integers, steps, components, or groups thereof.

No element, act, or instruction used in the description of the present application should be construed as critical or essential to the invention unless explicitly described as such. Also, as used herein, the article "a" is intended to include one or more items. Further, the phrase "based on," as used herein is intended to mean "based, at least in part, on" unless explicitly stated otherwise.

## Claims

1. A method, comprising:
selecting (1000) a first language as an active input language on a device (210) having a display (110);
presenting (1020) a first virtual keyboard associated with the first language on the display (110);
receiving a touch input comprising a directional touch swipe (130) on the display (110);
selecting a second language as the active input language based on the directional touch swipe (130), wherein the second language is different than the first language; and
presenting a second virtual keyboard associated with the second language on the display (110), wherein the second virtual keyboard is different than the first virtual keyboard.

2. The method according to claim 1, wherein the display (110) comprises a touch screen display (110) and wherein the touch input is received via the touch screen display (110), and wherein the directional touch swipe (130) comprises a touch input that moves in approximately a linear direction across the touch screen display (110).

3. The method according to any one of claims 1 and 2, wherein the touch input is received via a touch pad that is separate from the display.

4. The method according to any one of the preceding claims, wherein the device (210) comprises a cellular radiotelephone, a satellite navigation device, a smart phone, a Personal Communications System (PCS) terminal, a personal digital assistant (PDA), a gaming device, a media player device, a tablet computer, or a digital camera.

5. The method according to any one of the preceding claims, wherein the linear direction comprises a direction that is transverse to an axis running from a top to a bottom of the touch screen display (110).

6. The method according to any one of the preceding claims, further comprising:
accessing a first language dictionary associated with the first language while the first language is the active input language; and
accessing a second language dictionary associated with the second language while the second language is the active input language;
receiving user entered text while the first language is the active input language;
presenting word suggestions on the display (110) based on the user entered text and based on the first language dictionary;
receiving user entered text while the second language is the active input language; and
presenting word suggestions on the touch screen display (110) based on the user entered text and based on the second language dictionary.

7. The method according to any one of the preceding claims, further comprising:
receiving another touch input comprising a directional touch swipe (130);
selecting a third language as the active input language based on the other touch input, where the third language is different than the second language; and
presenting a third virtual keyboard associated with the third language on the display (110), wherein the third virtual keyboard is different than the second virtual keyboard.

8. A device (210), comprising:
a touch screen display (110) disposed on a face of the device (210) and configured to receive a touch input;
a language selection module (510) configured to select a first language as an active input language on the device (210); and
a touch screen display input/output module (500) configured to:
present a first virtual keyboard associated with the first language on the touch screen display (110), and
receive indication of a touch input comprising a directional touch swipe (130) from the touch screen display (110),
wherein the language selection module (510) is further configured to select a second language as the active input language based on the directional touch swipe (130), wherein the second language is different than the first language, and
wherein the touch screen display input/output module (500) is further configured to present a second virtual keyboard associated with the second language on the touch screen display (110), wherein the second virtual keyboard is different than the first virtual keyboard.

9. The device (210) according to claim 8, wherein the device (210) comprises a cellular radiotelephone, a satellite navigation device, a smart phone, a Personal Communications System (PCS) terminal, a personal digital assistant (PDA), a gaming device, a media player device, a tablet computer, or a digital camera.

10. The device (210) according to any one of claims 8 and 9, wherein the directional touch swipe (130) comprises a touch input that moves in approximately a linear direction across the touch screen display (110).

11. The device (210) according to any one of claims 8 - 10, wherein the linear direction comprises a direction that is transverse to an axis running from a top to a bottom of the touch screen display (110).

12. The device (210) according to any one of claims 8 - 11, further comprising:
a language dictionary module (530) configured to:
access a first language dictionary associated with the first language while the first language is the active input language; and
access a second language dictionary associated with the second language while the second language is the active input language,
wherein the touch screen display input/output module (500) is further configured to receive user entered text while the first language is the active input language,
a word suggestion module (540) is configured to provide word suggestions for display on the touch screen display (110) based on the user entered text and based on the first language dictionary,
wherein the touch screen display input/output module (500) is further configured to:
receive user entered text while the second language is the active input language; and
wherein the word suggestion module (540) is further configured to provide word suggestions for display on the touch screen display (110) based on the user entered text and based on the second language dictionary.

13. The device (210) according to any one of claims 8 - 12, wherein the touch screen display (110) input/output module is further configured to receive an indication of another touch input comprising another directional touch swipe (130) on the touch screen display (110),
wherein the language selection module (510) is further configured to select a third language as the active input language based on the other touch input, wherein the third language is different than the second language and
wherein the touch screen display input/output module (500) is further configured to present a third virtual keyboard associated with the third language on the touch screen display (110), wherein the third virtual keyboard is different than the second virtual keyboard.

14. A computer-readable medium containing instructions executable by at least one processing unit, the computer readable medium comprising:
one or more instructions for selecting a first language as an active input language on a device (210) having a touch screen display (110);
one or more instructions for presenting a first virtual keyboard associated with the first language on the touch screen display (110);
one or more instructions for identifying a touch input comprising a directional swipe (130) on the touch screen display (110);
one or more instructions for selecting a second language as the active input language based on the directional touch swipe (130), wherein the second language is different than the first language; and
one or more instructions for presenting a second virtual keyboard associated with the second language on the touch screen display (110), wherein the second virtual keyboard is different than the first virtual keyboard;
one or more instructions for accessing a first language dictionary associated with the first language while the first language is the active input language; and
one or more instructions for accessing a second language dictionary associated with the second language while the second language is the active input language..

15. The computer-readable medium of claim 14, wherein the directional touch swipe (130) comprises a touch input that moves in approximately a linear direction across the touch screen display (110) and wherein the linear direction comprises a direction that is transverse to an axis running from a top to a bottom of the touch screen display (110).
